Europäisches Patentamt

European Patent Office

Office européen des brevets

(11) Veröffentlichungsnummer: **0 233 306**
B1

(12)

# EUROPÄISCHE PATENTSCHRIFT

(45) Veröffentlichungstag der Patentschrift:
31.01.90

(51) Int. Cl.⁴: **A01K 39/02**

(21) Anmeldenummer: **86103381.9**

(22) Anmeldetag: **13.03.86**

(54) **Geflügeltränke, insbesondere Taubentränke.**

(30) Priorität: **24.01.86 DE 8601763 U**

(43) Veröffentlichungstag der Anmeldung:
**26.08.87 Patentblatt 87/35**

(45) Bekanntmachung des Hinweises auf die Patenterteilung:
**31.01.90 Patentblatt 90/5**

(84) Benannte Vertragsstaaten:
**BE DE NL**

(56) Entgegenhaltungen:
**DE-A- 2 815 211**
**US-A- 1 122 685**
**US-A- 1 224 043**

(73) Patentinhaber: **Klaus Gritsteinwerk KG,
Buchenstrasse 7, D-4980 Bünde(DE)**

(72) Erfinder: **Pollen, Erwin, Karl-Sonnenschein-Strasse 47,
D-4054 Nettetal 1(DE)**

(74) Vertreter: **Stracke, Alexander, Dipl.-Ing. et al,
Patentanwälte Dipl.-Ing. Loesenbeck Dipl.-Ing. Stracke
Jöllenbecker Strasse 164 Postfach 5605,
D-4800 Bielefeld 1(DE)**

## Beschreibung

Die Erfindung betrifft eine Geflügeltränke, insbesondere Taubentränke, aus einem topfartigen Behälter, dessen Seitenwandung mehrere, den Tieren ein Hindurchstecken des Kopfes ermöglichende Trinköffnungen aufweist.

Eine derartige Geflügeltränke wird in einem Taubenschlag oder dergleichen aufgestellt und teilweise mit Wasser gefüllt. Die Tauben können das Wasser erreichen, wenn sie ihren Kopf durch eine der Trinköffnungen in der Seitenwand stecken. Durch die Öffungen können jedoch auch Staub, Krankheitskeime und Kot durch die Bewegungen im Taubenschlag in den Behälter gelangen und das Trinkwasser verunreinigen.

Bei einer bekannten Geflügeltränke der gattungsgemäßen Art (DE A 2 815 211) versucht man dem dadurch entgegenzuwirken, daß man die Tränke als solche mit einem Halter verbindet, der die eigentliche Tränke abständig von Stallboden hält. Die Trinköffnungen bleiben aber immer offen. Trotz des mit der Halterung baulichen Aufwandes ist ein durchgreifender Schutz des Trinkwassers nicht gegeben, da die Öffnungen jederzeit weiterhin offenstehen.

durch die US A 1 122 685 ist nun ein Geflügelfuttertrog bekannt, dessen Behälterwandung an einer Seite eine großvolumige Futteröffnung aufweist, die innenseitig mit einer Klappe abgedeckt ist. Die Klappe sitzt an einem oberhalb der Futteröffnung befindlichen Scharnier. Die Klappe hält, wenn kein Tier an den Futtertrog herantritt, die Öffnung geschlossen, insbesondere um Ratten, Mäuse und Spatzen vom Futter fernzuhalten. Die Klappe verhindert dabei auch eine Verunreinigung des Futters.

Um bei diesem Futtertrog die Klappe gezielt nur für die zu fütternden Nutztiere zu öffnen, ist die Scharnierachse der Klappe mit einem gewichtsabhängigen Antriebsmechanismus gekoppelt, dergestalt, daß nur dann, wenn Tiere ab einem bestimmten Körbergewicht den Öffnungsvorgang auslösende Platte vor dem Geflügelfuttertrog betreten, die Klappe über den Antriebsmechanismus gegen die Kraft eines Stellgewichtes geöffnet wird. Betreten dagegen die genannten Schadtiere die Platte, erfolgt, da deren Körpergewicht im Verhältnis zu dem der zu fütternden Nutztiere geringer ist, keine Öffnungsbewegung. Ein derartiger gewichtsgesteuerter Antriebsmechanismus für die Klappe führt zu einem komplizierten konstruktiven Aufbau. Es ist auch störanfällig, da wesentliche Bewegungsteile des Antriebsmechanismus für die Klappe in Bodennähe des Stalles einer ganz erheblichen Verschmutzungsgefahr ausgesetzt sind. Würde man diese Ausgestaltung bei einer Geflügeltränke mit mehreren Trinköffnungen anwenden, wäre im Grunde genommen jeder Trinköffnung ein eigenständiger Antriebsmechanismus zuzuordnen, da bei einem gemeinsamen Antriebsmechanismus für alle Trinköffnungen dann bei Inanspruchnahme durch nur ein Tier alle anderen Trinköffnungen unbenutzt offenstünden.

Der vorliegenden Erfindung liegt die Aufgabe zugrunde, eine Geflügeltränke der gattungsgemäßen Art zu schaffen, die es bei denkbar einfachem konstruktiven Aufbau zuverlässig ermöglicht, das Tinkwasser in der Geflügeltränke sauber zu halten.

Die erfindungsgemäße Lösung besteht darin, daß die Trinköffnungen innenseitig jeweils mit einer eigenen Klappe abgedeckt sind und die Klappen oberhalb der Trinköffnungen frei drehbar mit Scharnieren gelagert sind.

Die Klappen halten die Trinköffnungen normalerweise geschlossen, da sie durch ihre frei drehbare Lagerung infolge ihres Eigengewichtes innenseitig am Randbereich der Trinköffnungen anliegen. Nur wenn ein Tier trinken will und seinen Kopf durch die Trinköffnung steckt, um an das Trinkwasser zu gelangen, wird diese eine betroffene Klappe vom Kopf des Tieres automatisch zurückgedränkt, während die anderen nicht benutzten Trinköffnungen verschlossen bleiben. Tritt das Tier von der Tränke zurück, schließt die Klappe der benutzten Trinköffnung automatisoh. Der konstruktive Aufbau ist denkbar einfach. Der drehbewegliche Teil der Klappen ist auch geschützt im Inneren des Behälters untergebracht. Außer ihrer Scharnierachse benötigen die Klappen zu ihrer Betätigung keinerlei Stell- oder Antriebsmechanismus. Aufgrund dieses einfachen Aufbaus lassen sich auch bereits vorhandene Geflügeltränken problemlos mit derartigen Klappen nachrüsten.

Zweckmäßige weitere Ausgestaltungen sind in den Unteransprüchen gekennzeichnet. So können die Scharnierachsen für die einzelnen Klappen innen an der Seitenwandung angeordnet werden. In einer anderen zweckmäßigen Ausgestaltung ist es auch möglich, die Scharnierachsen innen an einem Einsatzring anzuordnen, der auf den Rand des Behälters aufsetzbar oder in den Behälter einsetzbar ist. Dies erleichtert in besonderem Maße die Nachrüstung bereits vorhandener herkömmlicher Geflügeltränken mit den Klappen für die Trinköffnungen. Wenn in einem solchen Fall der Behälter sich nach oben konisch erweitert, ist ein Einsatzring mit gleichem Konus zweckmäßig, der in den Behälter einsetzbar ist.

Nachfolgend wird ein in der Zeichnung dargestelltes Ausführungsbeispiel der Erfindung näher beschrieben.

Es zeigen

Fig. 1 eine Draufsicht auf eine Geflügeltränke,
Fig. 2 einen Schnitt in Richtung A-B durch den Gegenstand nach Figur 1,
Fig. 3 Innenansicht einer Klappe,
Fig. 4 eine Seitenansicht einer Klappe,
Fig. 5 eine Draufsicht auf eine Klappe.

Die dargestellte Geflügeltränke besteht aus einem topfartigen Behälter 1 mit einem Boden 2, der einen kreisförmigen Grundriß besitzt und einer daran anschließenden Seitenwandung 3, die sich konisch nach oben erweitert. In der Seitenwandung 3 befinden sich über den Umfang verteilt mehrere Öffnungen 4 die so groß sind, das z.B. eine Taube ihren Kopf durch eine Öffnung 4 in den Behälter 1 stecken kann, um Wasser zu trinken, welches in den Behälter eingefüllt ist.

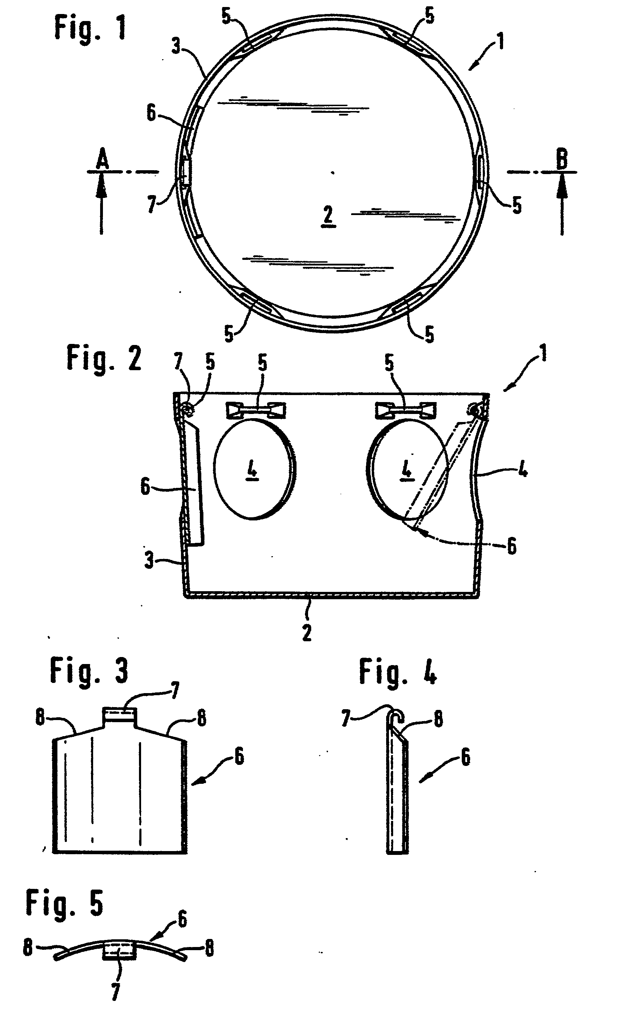

Oberhalb der Öffnung 4 sind innenseitig an der Seitenwandung 3 Scharnierachsen 5 für daran gelenkig aufgehängte Klappen 6 befestigt. Die Scharnierachsen 5 erstrecken sich horizontal. Die Klappen 6 sind so groß, daß Sie in geschlossenem Zustand die Öffnungen 4 abdecken. Jede Klappe 6 besitzt am oberen Rand einen Scharnierhaken 7, der hinter und über die Scharnierachsen 5 gehängt wird. Die Klappen sind, wie insbesondere aus Figur 5 ersichtlich, der Kontur der Seitenwandung folgend gebogen, die oberen Ränder 8 jeder Klappe 6 sind beiseits des Scharnierhakens 7 abgeschrägt, so daß eine Klappe 6 ohne Behinderung verschwenkt werden kann, wenn eine Taube ihren Kopf durch eine Öffnung 4 steckt. In Figur 2 ist auf der linken Seite mit durchgezogenen Linien eine geschlossene Klappe und auf der rechten Seite mit strichpunktierten Linien eine teilweise geöffnete Klappe dargestellt.

Nicht dargestellt ist, daß die Scharnierachsen 5 auch innenseitig an einem Einsatzring befestigt sein können, der auf eine vorhandene Geflügeltränke aufgesetzt oder in diese eingesetzt wird.

## Patentansprüche

1 Geflügeltränke, insbesondere Taubentränke, mit einem topfartigen Behälter (1), dessen Seitenwandung (3) mehrere, den Tiere, ein Hindurchstecken des Kopfes ermöglichende Trinköffnungen (4) aufweist, dadurch gekennzeichnet, dass die Trinköffnungen (4) innenseitig jeweils mit einer eigenen Klappe (6) abgedeckt sind und die Klappen (6) oberhalb der Trinköffnungen (4) frei drehbar mit Scharnieren (5, 7) gelagert sind.

2. Geflügeltränke nach Anspruch 1, dadurch gekennzeichnet, daß die Scharnierachsen (5) innen an der Seitenwandung (3) angeordnet sind.

3. Geflügeltränke nach Anspruch 1, dadurch gekennzeichnet, daß die Scharnierachsen (5) innen an einem Einsatzring angeordnet sind, der auf den Rand des Behälters (1) aufsetzbar oder in den Behälter (1) einsetzbar ist.

4. Geflügeltränke nach Anspruch 3, dadurch gekennzeichnet, daß der Behälter (1) sich konisch nach oben erweitert und das der Einsatzring mit gleichen Konus in den Behälter (1) einsetzbar ist.

## Claims

1 . Drinking trough for poultry, in particular drinking trough for pigeons, with a pot-like container (1), the side wall (3) of which comprises a plurality of drinking openings (4) , said drinking openings (4) allowing the animals to stick their heads through, characterized in that the drinking openings (4) are each covered on the inside with their own flap (6) and the flaps (6) are freely rotatably held above the drinking openings (4) by means of hinges (5, 7).

2. Drinking trough for poultry according to claim 1, characterized in that the hinge pins (5) are disposed on the inside of the side wall (3).

3. Drinking trough for poultry according to claim 1, characterized in that the hinge pins (5) are disposed on the inside of an insert ring, said insert ring being adapted to be placed on the rim of the container (1) or to be inserted into the container (1).

4. Drinking trough for poultry according to claim 3, characterized in that the container (1) widens out conically towards the top and in that the insert ring is adapted to be inserted with the same conicity into the container (1).

## Revendications

1 . Abreuvoir avicole, en particulier abreuvoir à pigeons , avec une cuve (1) en forme de pot, dont la paroi latérale (3) reçoit plusieurs ouvertures (4) à travers lesquelles les animaux peuvent passer leur tête, caractérisé en ce que les ouvertures (4) sont chacune fermées à l'intérieur par une trappe (6) et que les trappes (6) sont fixées à des charnières (5, 7) situées au-dessus des ouvertures 4 de manière à pouvoir tourner librement.

2 . Abreuvoir avicole selon la revendication 1, caractérisé en ce que les axes de charnière (5) sont disposés à 1, intérieur de la paroi latérale (3).

3 . Abreuvoir avicole selon la revendication 1, caractérisé en ce que les axes de charnière (5) sont disposés à l'intérieur sur une bague qui peut être posée sur la bord de la cuve (1) ou être insérée dans la cuve (1).

4. Abreuvoir avicole selon la revendication 3, caractérisé en ce que la cuve (1) s'agrandit vers le haut en forme de cône et que la bague peut être insérée dans la cuve (1) en formant le même cône.

EP 0 233 306 B1

Fig. 1

Fig. 2

Fig. 3

Fig. 4

Fig. 5